(19) Europäisches Patentamt
European Patent Office
Office européen des brevets

(11) Veröffentlichungsnummer: **0 056 115 A2**

(12) # EUROPÄISCHE PATENTANMELDUNG

(21) Anmeldenummer: **81110187.2**

(22) Anmeldetag: **05.12.81**

(51) Int. Cl.³: **C 08 L 25/12**, C 08 L 55/02

(30) Priorität: **17.12.80 DE 3047443**

(43) Veröffentlichungstag der Anmeldung: **21.07.82 Patentblatt 82/29**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Buysch, Hans-Josef, Dr., Brandenburger Strasse 28, D-4150 Krefeld (DE)**
Erfinder: **Pischtschan, Alfred, Dr., Zur Eiche 33, D-5067 Kürten (DE)**
Erfinder: **Humme, Gert, Dr., Ackerstrasse 17, D-5068 Odenthal (DE)**
Erfinder: **Ott, Karl-Heinz, Dr., Paul-Klee-Strasse 54, D-5090 Leverkusen (DE)**

(54) **Gegen Thermolyse stabilisierte Formmassen mit geringem Monomerengehalt.**

(57) Gegen thermolytischen Abbau stabilisierte thermoplastische Formmassen mit geringen Restmonomergehalten auf der Basis von Acrylnitril, Styrol (oder α-Methylstyrol) und gegebenenfalls Kautschuken, enthaltend 0,01 bis 20 Gew.-%, bezogen auf Gesamtgewicht, von Verbindungen der Formel I

$$R^1-[-(NH-R^2-)_n-NH-R^3]_m \quad (I)$$

mit einer Basizität $pk_a > 7,0$ und/oder deren Salzen mit schachen Säuren, die einen $pk > 2,0$ besitzen, in der n eine ganze Zahl von 0 bis 10, m eine ganze Zahl von 1 bis 500, sowie $R^1$ und $R^3$ gleiche oder verschiedene organische Reste darstellen.

EP 0 056 115 A2

0056115

BAYER AKTIENGESELLSCHAFT 5090 Leverkusen, Bayerwerk
Zentralbereich G/bc
Patente, Marken und Lizenzen

# Gegen Thermolyse stabilisierte Formmassen mit geringem Monomerengehalt

Die Erfindung hat Formmassen zum Gegenstand, die sich durch geringen Monomerengehalt auszeichnen, und die Stabilisatoren gegen thermolytischen Abbau enthalten.

Thermoplastische Formmassen, die Styrol (oder α-Methylstyrol) und Acrylnitril in polymerisierter Form enthalten, sind bekannt. Dazu gehören beispielsweise Copolymerisate von Styrol und Acrylnitril ("SAN-Harze") und Pfropfpolymerisate von Styrol, Acrylnitril und/oder anderen olefinisch ungesättigten Monomeren auf einem Kautschuk, z.B. einem Dienkautschuk.

Diese Formmassen lassen sich nach verschiedenen Polymerisationsverfahren herstellen. Man kann ihren Gehalt an nicht-polymerisierten Monomeren (Restmonomeren) sehr niedrig halten, aber bei der Weiterverarbeitung zu Formkörpern durch Spritzguß oder Extrusion können wegen der erforderlichen hohen Temperaturen durch thermischen Abbau der Formmassen Monomere zurückgebildet werden. Diese Thermolyse kann unter ungünstigen Verhältnissen je nach Temperatur und Verweilzeit in den heißen Zonen der Verarbeitungsmaschinen beträchtlich sein. Sehr hohe Verarbeitungstemperaturen, die die Thermolyse begünstigen, sind erforderlich für die Herstellung besonders dünnwandiger und großflächiger Formteile.

Es besteht somit ein Bedürfnis, die Thermolyseneigung zu vermindern.

Man hat vorgeschlagen, die Monomergehalte von Formmassen der oben beschriebenen Art durch Zusätze von Arylsulfonylhydraziden zu senken.

Nach GB-PS 1 535 344 sollen so jedoch Restmonomere entfernt werden, die bei der Homo- und Copolymerisation des Styrols im Polymerisat verblieben sind. Die Sulfonsäurehydrazide werden bei verhältnismäßig niedrigen Temperaturen von maximal 220°C eingearbeitet. Dies ist erforderlich, damit sich die Hydrazide im Polymerisat homogen verteilen und wirksam werden, bevor sie sich völlig zersetzt haben. Eine Stabilisierung der Formmassen gegen Thermolyse bei der Verarbeitung - im allgemeinen bei 240 bis 280°C - kann daher nicht erwartet werden. Mit Hydraziden ausgerüstete Formmassen setzen während der thermoplastischen Verarbeitung gasförmige Stoffe frei. Dadurch entstehen sogenannte Silberschlieren auf den Oberflächen der Formteile; im allgemeinen sind solche Formteile unbrauchbar.

Gegenstand der Erfindung sind gegen thermolytischen Abbau stabilisierte thermoplastische Formmassen mit geringen Restmonomergehalten auf der Basis von Acrylnitril,

Styrol (oder α-Methylstyrol) und gegebenenfalls Kautschuken, gekennzeichnet durch einen Gehalt von 0,01 bis 20 Gew.-% (bezogen auf Gesamtgewicht) von Verbindungen der Formel (I)

$$R^1\left[(NH-R^2)_n NH-R^3\right]_m \qquad (I)$$

mit einem $pk_a > 7,0$ und/oder deren Salzen mit schwachen Säuren, die einen $pk > 2,0$ besitzen, in der n eine ganze Zahl von 0 bis 10, m eine ganze Zahl von 1 bis 500, $R^1$ und $R^3$ gleich oder verschieden sind, und H $C_1$-$C_{18}$-Alkyl-, $C_5$-$C_{12}$-Cycloalkyl-, $C_7$-$C_{18}$-Aralkylreste bedeuten, die Ether-, Thioether-, olefinische Doppelbindungen, Borsäureester-, Borsäureamid-, Phosphorigsäureester-, Phosphorigsäureamid-, Phosphorsäureester-, Phosphorsäureamid-, Titansäureester-, Sulfonsäureamid-, Harnstoff-, Urethan-, Imidazolin-, Carboxyl-, Carbonsäurenitril-, Carbonsäureamid-, OH-, SH-, primäre, sekundäre oder tertiäre aliphatische, araliphatische und aromatische Aminogruppen oder siliciumorganische Reste als Substituenten oder als die Kohlenstoffketten unterbrechende Glieder (außer der SH-, OH-, Carboxyl- und Carbonitrilgruppe) enthalten können, ferner $R^4$ CO-, $R^4SO_2$ und $C_6$-$C_{18}$-Aryl bedeuten mit der Maßgabe, daß $R^1$ und $R^3$ dies gleichzeitig nur dann sein können, wenn n größer als 1 ist, wobei $R^4$ $C_1$-$C_{18}$-Alkyl, gegebenenfalls substituiert oder unterbrochen durch die obengenannten Gruppen, $C_7$-$C_{24}$-Aralkyl und $C_6$-$C_{18}$-Aryl, gegebenenfalls substituiert mit den obengenannten Gruppen sein kann, $R^1$ weiter ein Polymeres oder Mischpolymeres auf der Basis von Styrol oder Acrylsäure bedeutet, an das der Rest des Moleküls,

der in eckiger Klammer steht, über eine $CH_2$-, Sulfonamid oder Carbonamidgruppe angeheftet ist, wobei in den beiden letzteren Fällen n mindestens 1 sein muß und m eine ganze Zahl von 4 bis 500 darstellt, $R^1$ weiter ein 2- bis 4-wertiger aliphatischer Rest mit 2 bis 24 C-Atomen, ein araliphatischer Rest mit 7 bis 24 C-Atomen, für n größer 0 auch ein aromatischer Rest mit 6 bis 18 C-Atomen, wobei alle Reste durch die o.a. Gruppen substituiert oder gegebenenfalls unterbrochen sein können, ein Melaminrest, ferner ein Rest $R^5(CO)_r$, $R^5(SO_2)_r$,

$R^5(O-\overset{O}{\overset{\|}{C}})_r$, $R^5(NH-\overset{O}{\overset{\|}{C}})_r$ ,

wobei n mindestens 1 ist, weiter

$R^5(SCH_2CH_2CH_2)_r$, $R^5(OCH_2CH_2CH_2)_r$ ,

$R^5[O-P(OCH_2CH_2)_2]_r$ , $R^5[O-B(OCH_2CH_2)_2]_r$ ,

$R^5[O-\underset{\underset{O}{\downarrow}}{P}(OCH_2CH_2)_2]_r$ ;

in dem $R^5$ ein gegebenenfalls, wie oben beschrieben, substituierter oder unterbrochener 2- bis 4-wertiger Rest mit 1 bis 24 C-Atomen aliphatischer, araliphatischer oder aromatischer Natur ist, und r eine ganze Zahl von 2 bis 4, und $R^2$ ein aliphatischer mit 1 bis 18 C-Atomen oder araliphatischer Rest mit 8 bis 24 C-Atomen bedeutet, der entsprechend obiger Beschreibung (zu $R^1$ und $R^3$) mit den dort genannten Gruppen substituiert ist oder durch solche unterbrochene C-Ketten aufweist.

Bevorzugt sind solche Verbindungen der allgemeinen Formel I, in denen n mindestens 1 und m 1 bis 300 ist, und $R^1$ und $R^3$ H, $C_1$-$C_{18}$-Alkyl, $C_7$-$C_{12}$-Aralkyl bedeuten, die Ether-, Thioether-, Phosphorigsäureester-, Harnstoff-, Urethan-, Imidazolin-, Carboxyl-, Carbonsäureamid-, OH-, SH-, primäre, sekundäre oder tertiäre aliphatische, araliphatische und aromatische Aminogruppen oder siliciumorganische Reste als Substituenten oder als die Kohlenstoffketten unterbrechende Glieder (außer der SH-, OH- und Carboxylgruppe) enthalten können,
ferner $R^4$ CO und $C_6$-$C_{12}$-Aryl bedeuten,
wobei $R^4$ $C_1$-$C_{12}$-Alkyl, gegebenenfalls substituiert oder unterbrochen durch die obengenannten Gruppen, $C_7$-$C_{12}$-Aralkyl und $C_6$-$C_{12}$-Aryl, gegebenenfalls substituiert oder unterbrochen durch die obengenannten Gruppen sein kann, $R^1$ weiter ein Polymeres oder Mischpolymeres auf der Basis von Styrol oder Acrylsäure bedeutet, an das der Rest des Moleküls, der in eckiger Klammer steht, über eine $CH_2$-, Sulfonamid- oder Carbonamid angeliefert ist, und m eine ganze Zahl von 4 bis 300 darstellt. $R^1$ ferner ein 2- oder 3-wertiger aliphatischer Rest mit 2 bis 12 C-Atomen, ein Melaminrest, ein Rest $R^5$ $(CO)_r$, $R^5$ $(OCO)_r$, $R^5$ $(NHCO)_r$, in dem $R^5$ ein gegebenenfalls, wie oben beschriebener substituierter oder unterbrochener 2- oder 3-wertiger Rest mit 2 bis 12 C-Atomen aliphatischer, araliphatischer oder aromatischer Natur ist, und r eine ganze Zahl von 2 oder 3 bedeutet;
$R^2$ ein aliphatischer mit 1 bis 18 C-Atomen oder araliphatischer Rest mit 8 bis 12 C-Atomen.

Besonders bevorzugt sind solche Verbindungen der allgemeinen Formel I, in denen n = 2 und größer als 2 ist, m eine ganze Zahl von 1 bis 200 ist,
$R^1$ und $R^3$ H, $C_1$-$C_{12}$-Alkyl, $C_7$ und $C_8$-Aralkyl bedeuten, die Ether-, Thioether-, Phosphorigsäureester-, Carbonsäureamid-, OH-, SH-, primäre und sekundäre aliphatische und araliphatische Aminogruppen oder Kieselsäureestergruppen als Substituenten oder als die Kohlenstoffkette unterbrechende Glieder (außer SH und OH) enthalten können, ferner $R^4$ CO bedeuten, wobei $R^4$ $C_1$-$C_{12}$-Alkyl, gegebenenfalls substituiert oder unterbrochen durch OH-, Amino-, Ether- und Thioethergruppen,

$R^1$ weiter ein Polymeres oder Mischpolymeres auf der Basis von Styrol oder Acrylsäure bedeutet, an das der Rest des Moleküls in der eckigen Klammer über eine $CH_2$-, Sulfonamid- oder Carbonamidgruppe angeheftet ist, m eine ganze Zahl von 4 bis 200 darstellt,
$R^1$ weiter ein 2-wertiger aliphatischer Rest mit 2 bis 12 C-Atomen, der durch Ether-, Thioether- oder Aminogruppen unterbrochen bzw. substituiert sein kann,
ferner ein Rest $R^5$ $(CO)_2$, in dem $R^5$ ein gegebenenfalls, wie für $R^4$ beschrieben, substituierter oder unterbrochener 2-wertiger aliphatischer Rest mit 1 bis 12 C-Atomen,
$R^2$ ein aliphatischer Rest mit 2 oder 3 C-Atomen bedeutet.

Erfindungsgemäß ausgerüstete Formmassen enthalten im allgemeinen erheblich weniger Monomere als vergleichbare nicht ausgerüstete Formmassen, d.h., die erfindungsgemäßen Zusätze wirken nicht nur dem thermischen Abbau entgegen, sondern auch im Sinne einer Reinigung der Polymerisate von Monomeren, die von der Herstellung her noch in ihnen vorhanden sind.
Besonders geeignete Formmassen im Sinne der Erfindung sind z.B. Polymerisate aus Styrol (gegebenenfalls α-Methylstyrol) und Acrylnitril und deren Pfropfpolymerisate auf 1,3-Dien-Kautschuk.

Hierzu gehören z.B. Styrol-Acrylnitril-Copolymerisate (bevorzugt mit einem Styrol:Acrylnitril-Gewichtsverhältnis von 80 : 20 bis 60 : 40 %, in denen ein Teil des Styrols durch α-Methylstyrol ersetzt sein kann, sowie α-Methylstyrol/Acrylnitril-Copolymerisate mit Monomer-Gewichtsverhältnissen von α-Methylstyrol : Acrylnitril von 65 : 35 bis 75 : 25 %) schlagfeste Polystyrole, ABS-Polymerisate und ähnlich aufgebaute Zweiphasenkunststoffe vom z.B. ASA- oder AES-Typ, weiterhin auch Polymerlegierungen, die Anteile an den genannten Polymeren enthalten.

Unter ABS - Acrylnitril-Butadien-Styrol-Polymere - versteht man im Prinzip thermoplastische Harze, die Kautschuke in Form diskreter Teilchen eingelagert enthalten. Dabei können Acrylnitril, Butadien und Styrol ganz oder teilweise durch ähnliche Monomeren ersetzt sein. Meist ist der Kautschuk mit den harzbildenden Monomeren bepfropft und das Pfropfpolymerisat in einer Harzmatrix eingelagert.

AES - Acrylnitril-EPDM-Styrol-Polymere - unterscheiden sich von ABS-Polymeren durch die Verwendung von EPDM-Kautschuken. Dies sind Terpolymerisate aus Ethylen, Propylen und kleinen Mengen nichtkonjugierter Diene. Auch in diesem Falle ist der EPDM-Kautschuk üblicherweise auf den die Harzmatrix bildenden Monomeren gepfropft.

ASA - Acrylnitril-Styrol-Acrylat-Polymere - unterscheiden sich von ABS-Polymeren durch die Verwendung von Acrylatkautschuken anstelle der Butadien- oder allgemeiner Kautschuke.

Bevorzugte ABS-Polymere sind solche aus

1. 25 bis 100 Gew.-% eines Pfropfmischpolymerisats aus einem auf einen
   - 1.1 Kautschuk polymerisierten
   - 1.2 Monomerengemisch aus
     - 1.2.1 95 bis 50 Gew.-% Styrol,α-Methylstyrol oder Mischungen daraus
     - 1.2.2 50 bis 5 Gew.-% Acrylnitril, Methylmethacrylat oder Mischungen daraus, und

2. 75 bis 0 Gew.-% eines Copolymerisats von

2.1 95 bis 50 Gew.-% Styrol oder α-Methylstyrol oder Mischungen daraus,

2.2 50 bis 5 Gew.-% Acrylnitril, Methacrylnitril, Methylmethacrylat oder Mischungen daraus.

Geeignete Kautschuke sind z.B. Dienkautschuke, wie Homopolymerisate des Butadiens und Isoprens, oder deren Copolymerisate mit bis zu 20 Gew.-% Styrol. Weiter geeignet sind Ethylen-Propylen-Terpolymerisate (EPDM-Kautschuke). Diese Produkte sind aufgebaut aus Ethylen- und Propyleneinheiten im Verhältnis 20 : 80 bis 80 : 20 und enthalten als dritte Komponente ein nicht-konjugiertes Dien. Diese dritte Komponente ist in Mengen bis zu 15 Gew.-% vorhanden; bevorzugt besteht sie aus Norbornadien, Hexadien-1,5 oder Ethylidennorbornen.

Durch Mischen der EPDM-Kautschuke mit Copolymerisat entsprechend 2. erhält man sogenannte AES-Polymere, die sich gegenüber ABS-Kunststoffen durch verbessertes Witterungsverhalten auszeichnen. Zum gleichen Zweck kann man auch vernetzte Acrylatkautschuke als Pfropfgrundlagen verwenden und erhält dann nach Mischen mit Copolymerisat entsprechend 2. die bekannten ASA-Polymeren. Zur Herstellung der Acrylatkautschuke geeignete Monomere sind beispielsweise Acrylsäurealkyl ($C_1$-$C_7$-)Ester, von denen Acrylsäurebutylester bevorzugt wird.

Bei der Pfropfpolymerisation des angeführten Monomerengemisches auf den Kautschuk pfropfpolymerisiert man in

der Regel 20 bis 100 % der vorhandenen Monomeren. Der Rest wird für sich copolymerisiert.

ABS-Pfropfcopolymerisate sind nach üblichen Techniken herstellbar, beispielsweise gemäß den Angaben der deutschen Auslegeschriften 1 247 665 und 1 269 360 durch Emulsionspolymerisation.

Geeignete Substanzen, die erfindungsgemäß den o.a. Polymeren zuzusetzen sind, sind beispielsweise aliphatische Amine wie Butylamin, Dibutylamin, Cyclohexylamin, 4,4'-Diaminocyclohexylmethan, 2,4,4'-Triamino-dicyclohexylmethan, Isophorondiamin, 2,2,4-Trimethyl-hexamethylendiamin-1,6, Hexamethylendiamin, Stearylamin, Dodecylamin, Ethanolamin, Diethanolamin, Isopropanolamin, ß-Mercaptoethylamin, Bis-(ß-mercaptoethyl)-amin, Bis-(ß-aminoethyl)-ether, Bis-(ß-amino-propyl)-ether, weitere auch etherhaltige Polyamine, die durch Cyanethylierung von aciden CH-, Hydroxy-, Mercapto- und Aminoverbindungen und anschließende Hydrierung erhalten werden, z.B.

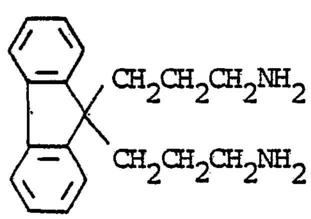

(II)

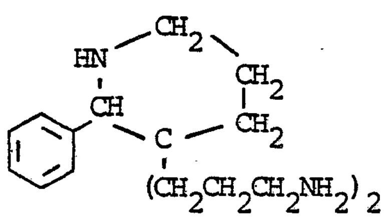

(III)

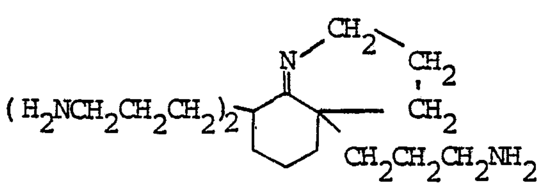

(IV)

$CH_2-O(CH_2)_3NH_2$
$CH-O(CH_2)_3NH_2$ (V)
$CH_2-O(CH_2)_3NH_2$

$H_2N-(CH_2)_3O(CH(CH_3)-CH_2)_xO(CH_2)_3NH_2$ x = 1-100 (VI)

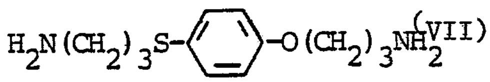
(VII)

$H_2N(CH_2)_3S(CH_2)_6S(CH_2)_3NH_2$ (VIII)

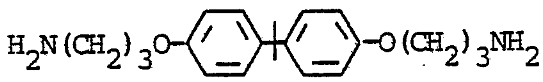
(IX)

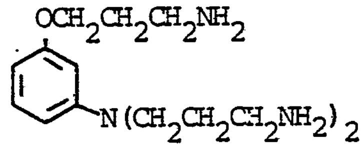
(X)

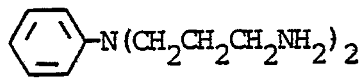
(XI)

$(H_2NCH_2CH_2CH_2)_2N(CH_2)_6N(CH_2CH_2CH_2NH_2)_2$

(XII)

Weitere Polyamine auf der Basis von Ethylen wie Diethylentriamin, Tetraethylenpentamin, Pentaethylenhexamin, Piperazin, ß-Aminoethylpiperazin, oxyethylierte oder oxypropylierte Polyamine wie

(HS) (SH)
$HO(CH_2)_2HNCH_2CH_2NHCH_2CH_2NH(CH_2)_2OH$ und

(XIII)

$[HOCH(CH_3)-CH_2-NHCH_2CH_2CH_2]_2\ N-(CH_2)_6\ N\ [CH_2CH_2CH_2NHCH_2CH(CH_3)OH]_2$

(XIV)

Die Umsetzungsprodukte solcher Amine mit Borsäure-, Phosphorigsäure-, Phosphorsäure-, Titansäure-, Organosilicium-, Carbonsäure- und Kohlensäurederivaten, z.B.

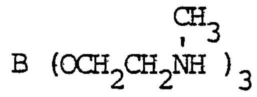

(XV)

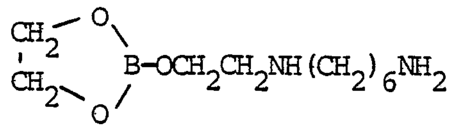

(XVI)

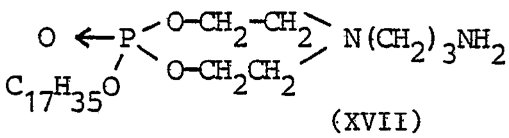

(XVII)

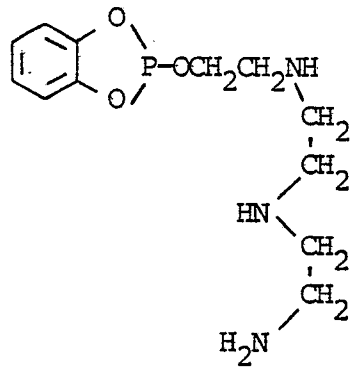

(XVIII)

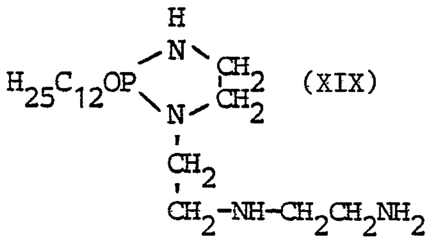

(XIX)

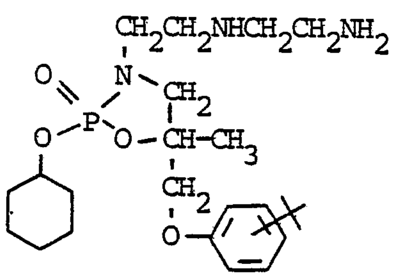

(XX)

$Ti[O(CH_2)_6NH_2]_4$

(XXI)

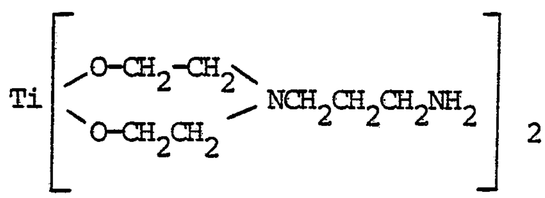

(XXII)

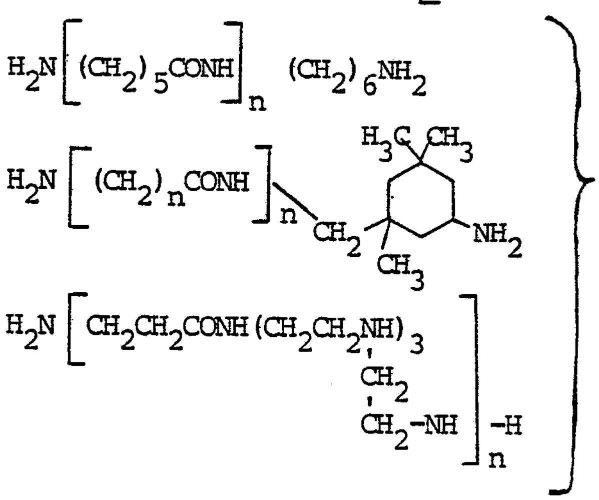

(XXIII)

(XXIV) n = 1-20

(XXV)

$HSCH_2CONH(CH_2CH_2NH)_2CH_2CH_2NHCOCH_2SH$ (XXVI)

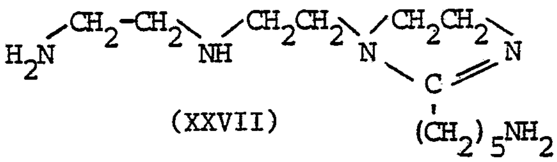

(XXVII)

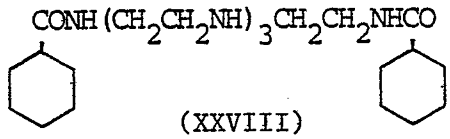

(XXVIII)

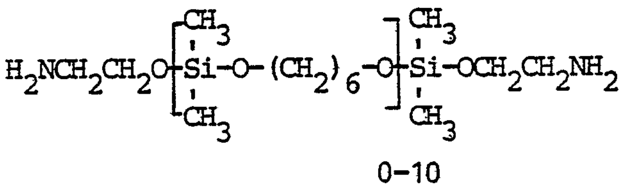

(XXIX)

$Si(OCH_2CH_2NH_2)_4$

(XXX)

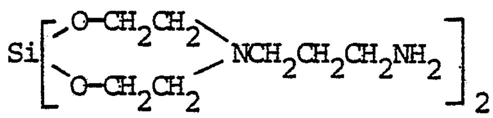

(XXXI)

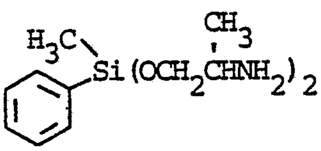

(XXXII)

$H_2N-(CH_2)_6NHCOO(CH_2)_6OCONH(CH_2)_6NH_2$ (XXXIII)

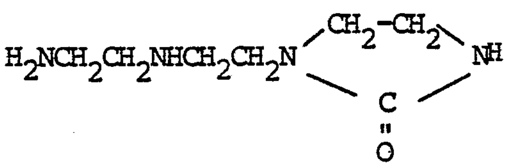

(XXXIV)

Ferner Polyamino-amide aus Dicarbonsäuren und Polyalkylenpolyaminen, beispielsweise auch aus Dimerfettsäuren und Tetraethylenpentamin, Arylalkylamine wie Benzylamin, Dibenzyldiethylentriamin, N-Benzylhexamethylendiamin, Xylylendiamin, schließlich polymere Amine auf der Basis von Styrol oder Acrylsäure wie

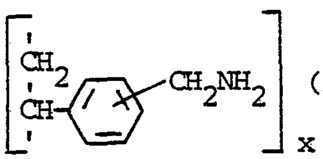
(XXXV)

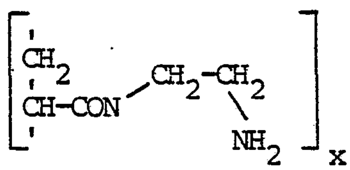
(XXXVI)

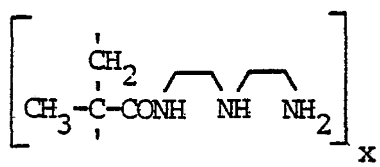
$x = 4\text{-}500$

(XXXVII)

Bevorzugte Verbindungen, die erfindungsgemäß den oben angegebenen Polymeren zuzusetzen sind, sind solche, in denen wenigstens zwei NH-Gruppen über den Rest $R^2$ miteinander verknüpft sind, z.B. Diethylentriamin, Benzyl-diethylentriamin, N,ß-Oxypropyl-hexamethylendiamin, ω-Amino-capronamid von Dipropylentriamin, ferner Verbindungen der Formeln XII, XIII, XIV, XVIII, XIX, XXV, XXXIII und XXXIV.

Besonders bevorzugte Verbindungen sind solche, in denen der Rest $R^2$ nur 2 oder 3 C-Atome enthält und wenigstens 3 Aminogruppen über $R^2$ miteinander verbunden sind.

z.B. Tetraethylenpentamin, Pentaethylenhexamin, Hexaethylenheptamin, ß-Aminoethyl-piperazin, N,N'-Bis-(ß-Aminoethyl)-piperazin, N,N'-Bis-(γ-amino-propyl)-piperazin, N,N'-Bis-(γ-aminopropyl)-ethylendiamin, sowie Alkylierungs- und Acylierungsprodukte dieser und ähnlicher Verbindungen wie XXVI, XXVII, XXVIII, ferner ω-Aminocapronamid von Pentaethylenhexamin,

$[H_2N(CH_2CH_2NH)_3CO\ CH_2CH_2]_2\ S$ $[H_2N(CH_2CH_2NH)_4\ CO\ CH_2CH_2]_2$

$[H_2N(CH_2CH_2NH)_3\ CH_2CH_2\ O]_3\ P$ $[H_2N(CH_2CH_2NH)_4CH_2CH_2O]_4\ Si$ und

$H_2NCH_2CH_2CH_2NH(CH_2CH_2NH)_2\ CH_2CH_2CH_2NH\ CO(CH_2)_5\ NH_2$

Natürlich können auch Gemische dieser geeigneten Amine und auch deren Salze mit schwachen Säuren, wie Phenolen, Mercaptanen, Carbonsäuren, phosphonigen und Phosphonsäuren eingesetzt werden.

Die zur Herstellung der erfindungsgemäßen Polymermassen erforderlichen Thermolysestabilisatoren werden nach an sich bekannten Verfahren synthetisiert.

Die genannten Verbindungen werden in Mengen von 0,01 bis 10 Gew.-%, vorzugsweise 0,1 bis 8 Gew.-%, besonders 0,2 bis 5 Gew.-%, bezogen auf das Gewicht der Formmassen, eingesetzt. Die Einarbeitung kann nach den üblichen Methoden erfolgen. So können die erfindungsgemäß zu verwendenden Substanzen dem Latex zugegeben werden,

sie können aber auch in irgendeinen Compoundierungsvorgang eingeschleust oder unmittelbar vor der Spritzguß- oder Extrusionsverarbeitung zugesetzt werden. Sie können als solche oder im Gemisch mit anderen Zuschlägen oder auch in Lösung zudosiert werden.

Neben den erfindungsgemäß zuzusetzenden Substanzen können wie üblich Antioxidantien, Gleitmittel, Verstärkungsmittel, UV-Absorber, Lichtschutzmittel, Entformungsmittel, Farbstoffe, Pigmente und Füllstoffe, Flammschutzmittel, Zähigkeitsverbesserer, Antistatika mitverwendet werden.

Untersuchungsmethodik

Die verwendeten ABS-Polymeren entsprechen typischen Vertretern bekannter Sortimente. Sie werden in den Beispielen entsprechend ihrer Verarbeitungs- und Eigenschaftsklasse allgemein und durch Angabe des Monomerenverhältnisses und des mittleren Molekulargewichts ihrer thermoplastischen Harzkomponenten näher charakterisiert.

Hierbei bedeuten:

A oder ACN: Acrylnitril
B: Butadien
S oder STY: Styrol
AMS: $\alpha$-Methylstyrol

Alle Angaben in Gewichtsprozent.

MG : Molekulargewicht
$\bar{M}_\eta$+)

+) $\bar{M}_\eta$, Viskositätsmittel aus $[\eta]$-M-Beziehung; H. Baumann, H. Lange; Angew. Makromol.Chem.9 (1969) 16-34.

Die Herstellung der untersuchten Compounds, ohne und mit Zusatz der erfindungsgemäßen Thermolysestabilisatoren, erfolgte im allgemeinen auf einem 3-kg-Laborinnenkneter vom Banbury-Typ. Entsprechend den relativ niedrigen Massetemperaturen erfolgt hierbei praktisch keine Rückspaltung. Übergang auf großtechnische Produktion veränderte daran nichts.

Als Verarbeitungsschritt wurde das Spritzgießen von Musterplättchen der Dimension 60x40x2 mm gewählt. Ausgehend von einem Knetercompound konnten hierbei jeweils schonend und unter hoher thermischer Beanspruchung Formteile für die nachfolgende analytische Monomerenbestimmung gewonnen werden.

Das Thermolyseverhalten der heißen ABS-Schmelze wird im wesentlichen von der Temperatur beeinflußt. Veränderungen der Zykluszeiten führten nicht zu wesentlich anderen Monomerengehalten. Auch der Übergang auf größere Formteile von z.B. mehreren hundert Gramm Gewicht änderte nichts am Thermolyseverhalten, sofern die Massetemperaturen vergleichbar waren.

Spritzgußmaschine für die Musterplättchen: Monomat 25, Eckert & Ziegler.

Die Bestimmung der Monomeren erfolgte nach bekannten Verfahren:

Styrol und α-Methylstyrol gaschromatographisch nach DIN 53 741 (Entwurf Dezember 1969),

Acrylnitril durch Dampfraum-Gaschromatographie unter Verwendung eines thermoionischen Stickstoff-Detektors; Veröffentlichung der Methode in 39. Mitt. Bundesgesundhbl. 20 (1977), Nr. 12.

Beispiele

Beispiel 1

Granulat eines ABS-Typs mit hoher Wärmeformbeständigkeit (A:B:S:AMS = 26:13:9:52)

wird bei 220 und 280°C im 19-Sekunden-Zyklus zu Musterplättchen verspritzt. Das gleiche erfolgt nach Ausrüstung mit verschiedenen Thermolysestabilisatoren. Die folgende Tabelle I gibt eine Übersicht über das Versuchsergebnis.

Tabelle I

| Thermostabilisator | Gew.-% | 220 °C ACN ppm | 220 °C STY ppm | 280 °C ACN ppm | 280 °C STY ppm |
|---|---|---|---|---|---|
| ohne | - | 54 | 860 | 260 | 850 |
| 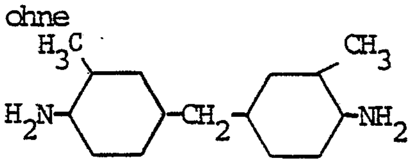 | 1,0 | 30 | 600 | 110 | 600 |
| $H_2N-(CH_2)_5CONH(CH_2CH_2NH)_4$ | 1,0 | 8 | 600 | 93 | 600 |
| $H_2NCH_2CH_2$ | 2,0 | 1 | 600 | 9 | 600 |
| $C_{17}H_{35}CONH(CH_2CH_2NH)_2CH_2CH_2NH_2$ | 2,0 | 8 | 550 | 20 | 610 |
| 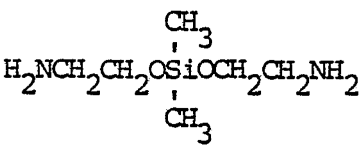 | 2,0 | 21 | 580 | 41 | 620 |
| 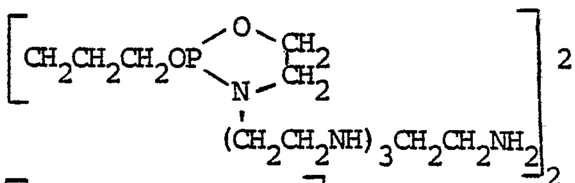 | 2,0 | 7 | 500 | 12 | 500 |
| 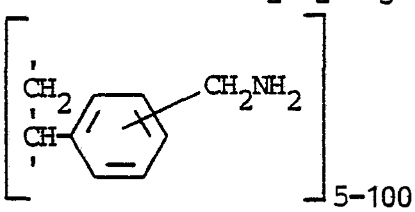 | 1,0 | 18 | 590 | 89 | 600 |
| 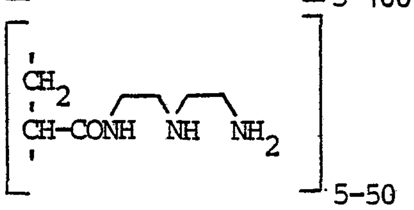 | 1,0 | 15 | 520 | 31 | 580 |

Beispiel 2

Granulat eines hochschlagzähen ABS-Typs (A:B:S = 19:31:50) wird mit verschiedenen Thermostabilisatoren versetzt und im 19-Sekunden-Zyklus zu Musterplättchen bei 220 bis 280°C verspritzt.

Tabelle II

| Thermostabilisator | Gew.-% | 220°C ACN ppm | 220°C STY ppm | 280°C ACN ppm | 280°C STY ppm |
|---|---|---|---|---|---|
| ohne | - | 5 | - | 20 | - |
| $P(OCH_2CH_2NHCH_2CH_2NH_2)_3$ | 1,0 | 2 | - | 5 | - |
| $Si(OCH_2CH_2NHCH_2CH_2NH_2)_4$ | 1,0 | 2 | - | 4 | - |
| | 2,0 | 1 | - | 2 | - |
| $S[CH_2CH_2CONH(CH_2CH_2NH)_4$<br>$H_2NCH_2CH_2]_2$ | 1,0 | 3 | - | 5 | - |

Beispiel 3

An einem ABS-Granulat eines Typs mit erhöhter Wärmeformbeständigkeit und erhöhter Zähigkeit mit der Bruttozusammensetzung A : B : S : α-Methylstyrol = 24 : 18 : 13 : 45 ohne bzw. mit Zusatz von 1.0 Teilen Thermolysestabilisator wurden die in Tabelle III verzeichneten Restmonomer-Mengen bestimmt.

Tabelle III

| | Monomere ppm | 220°C |
|---|---|---|
| ohne Stab. | ACN | 30 |
| | STY | 900 |
| | AMS | 3000 |

$H_2N(CH_2)_5CONH(CH_2CH_2NH)_4CH_2CH_2NH_2$

| | | |
|---|---|---|
| | ACN | 0,9 |
| | STY | 700 |
| | AMS | 2800 |

Aus dem so erhaltenen Granulat wurden bei 220 und 280°C Harztemperatur Musterplättchen durch Spritzguß hergestellt. Siehe folgende Tabelle IV.

Tabelle IV

| | Monomere ppm | 220°C | 280°C |
|---|---|---|---|
| ohne Stab. | ACN | 40 | 260 |
| | STY | 900 | 900 |
| | AMS | 2800 | 3000 |
| mit Stab. | ACN | 13 | 49 |
| wie Tab. III | STY | 220 | 330 |
| | AMS | 280 | 790 |

Beispiel 4

Ein ABS-Granulat vom Typ des Beispiels 1 wird mit 2,0 Gew.-% Titandioxid- bzw. Cadmiumsulfidpigment und mit und ohne Thermolysestabilisator wie in Tabelle III bei 220 und 280°C zu Musterplättchen verspritzt.

Das Ergebnis zeigt die folgende Tabelle V.

Tabelle V

| Zuschläge | Monomere ppm | 220°C | 280°C |
|---|---|---|---|
| 2,0 % Titandioxid ohne Stab. | ACN | 74 | 280 |
| | STY | 730 | 700 |
| | AMS | 1650 | 2210 |
| 2,0 % Titandioxid 0,5 % Stab. | ACN | 41 | 60 |
| | STY | 580 | 505 |
| | AMS | 930 | 1050 |
| 2,0 % Titandioxid 1,0 % Stab. | ACN | 28 | 40 |
| | STY | 410 | 430 |
| | AMS | 880 | 900 |
| 2,0 % Cadmiumsulfid 0,5 % Stab. | ACN | 38 | 46 |
| | STY | 570 | 560 |
| | AMS | 940 | 1030 |

Beispiel 5

Granulat eines Copolymerisats aus α-Methylstyrol (AMS) und Acrylnitril (AN) (AMS:AN = 65:35bis 75:25 Gew.-%) wird mit verschiedenen Thermostabilisatoren versetzt und im 19-Sekunden-Zyklus zu Musterplättchen bei 220 und 280°C verspritzt.

Tabelle VI

| | Gew.-% | 220°C ACN ppm | 220°C AMS ppm | 280°C ACN ppm | 280°C AMS ppm |
|---|---|---|---|---|---|
| ohne | - | 65 | 1850 | 285 | 2450 |
| a) 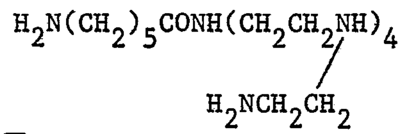 | 0,5 | 50 | 1300 | 95 | 1980 |
| | 1,0 | 29 | 980 | 45 | 1000 |
| b) 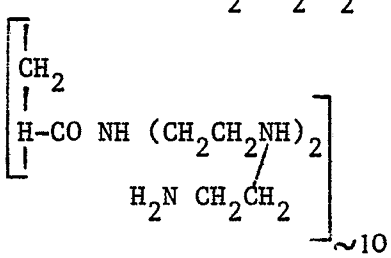 | 1,0 | 32 | 1100 | 70 | 1200 |
| | 2,0 | 26 | 850 | 40 | 950 |

Beispiel 6

Granulat eines SAN-Copolymerisats (Styrol : Acrylnitril = 80:20 bis 60:40 Gew.-%) wird mit verschiedenen Thermostabilisatoren versetzt und im 19-Sekunden-Zyklus zu Musterplättchen bei 200 und 280°C verspritzt.

Tabelle VII

| | Gew.-% | 220°C ACN ppm | 220°C STY ppm | 280°C ACN ppm | 280°C STY ppm |
|---|---|---|---|---|---|
| ohne | - | 10 | 1500 | 35 | 700 |
| a) 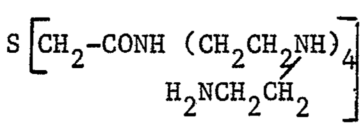 | 1,0 | 6 | 620 | 12 | 650 |
| b) 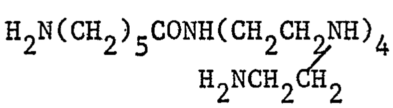 | 1,0 | 6 | 700 | 10 | 660 |

0056115

Vergleichsbeispiel

Ein ABS-Granulat eines Standardtyps wie im Beispiel 2 und des hochwärmeformbeständigen Typs wie im Beispiel 1 wurden je mit und ohne Zusatz von Arylsulfonsäurehydrazid entsprechend Brit. PS 1 535 344 bei 220 und 280°C im 19-Sekunden-Zyklus zu Musterplättchen verspritzt.

Das Ergebnis der Monomerenanalyse zeigt Tabelle VII. Außer in den beiden Versuchen ohne Hydrazid traten sehr stark Silberschlieren auf.

Tabelle VIII

| ABS-Typ und Hydrazid | Monomere ppm | 220°C | 280°C |
|---|---|---|---|
| Standardtyp | ACN | 7 | 19 |
| ohne Hydrazid | STY | 3200 | 2800 |
| " + 0,5 % 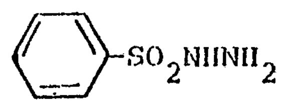 | ACN | 5 | 17 |
| | STY | 2500 | 2300 |
| " + 0,5 % 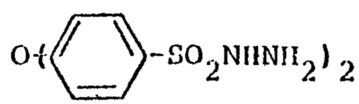 | ACN | 5 | 16 |
| | STY | 2500 | 2100 |
| hochwärmeformbeständiger | ACN | 48 | 300 |
| Typ ohne Hydrazid | STY | 500 | 500 |
| " mit 0,5 % 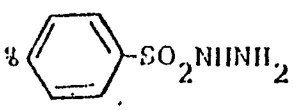 | ACN | 25 | 190 |
| | STY | 400 | 350 |
| " mit 0,5 % 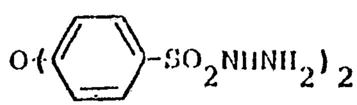 | ACN | 27 | 190 |
| | STY | 400 | 400 |

Patentansprüche

1) Gegen thermolytischen Abbau stabilisierte thermoplastische Formmassen mit geringen Restmonomergehalten auf der Basis von Acrylnitril, Styrol (oder α-Methylstyrol) und gegebenenfalls Kautschuken, gekennzeichnet durch einen Gehalt von 0,01 bis 20 Gew.-% (bezogen auf Gesamtgewicht) von Verbindungen der Formel (I)

$$R^1 \!\left[ (NH-R^2 \rightarrow_n NH-R^3 \right]_m \qquad (I)$$

mit einer Basizität $pk_a > 7,0$ und/oder deren Salzen mit schwachen Säuren, die einen $pk > 2,0$ besitzen, in der n eine ganze Zahl von 0 bis 10, m eine ganze Zahl von 1 bis 500, $R^1$ und $R^3$ gleich oder verschieden sind und H, $C_1$-$C_{18}$-Alkyl, $C_5$-$C_{12}$-Cycloalkyl, $C_7$-$C_{18}$-Aralkylreste bedeuten, die Ether, Thioether, olefinische Doppelbindungen, Borsäureester-, Borsäureamid-, Phosphorigsäureamid-, Phosphorsäureester-, Phosphorsäureamid-, Titansäureester-, Sulfonsäureamid-, Harnstoff-, Urethan-, Imidazolin-, Carboxyl-, Carbonsäurenitril-, Carbonsäureamid-, OH-, SH-, primäre, sekundäre oder tertiäre aliphatische, araliphatische und aromatische Aminogruppen oder siliciumorganische Reste als Substituenten oder als die Kohlenstoffketten unterbrechende Glieder (außer der SH-, OH-, Carboxyl- und Carbonitrilgruppe) enthalten können, ferner $R^4$ CO-, $R^4$ $SO_2$- und $C_6$-$C_{18}$-Aryl bedeuten mit der Maßgabe, daß $R^1$ und $R^3$ dies gleichzeitig nur dann sein können, wenn n größer als 1 ist, wobei

$R^4$ $C_1C_{18}$-Alkyl, gegebenenfalls substituiert oder unterbrochen durch die obengenannten Gruppen $C_7$-$C_{24}$-Aralkyl und $C_6$-$C_{18}$-Aryl, gegebenenfalls substituiert mit den obengenannten Gruppen, sein kann, $R^1$ weiter ein Polymeres oder Mischpolymeres auf der Basis von Styrol oder Acrylsäure bedeutet, an das der Rest des Moleküls, der in eckiger Klammer steht, über eine $CH_2$-Sulfonamid oder Carbonamidgruppe angeheftet ist, wobei in den beiden letzteren Fällen n mindestens 1 sein muß und m eine ganze Zahl von 4 bis 500 darstellt, $R^1$ weiter ein 2- bis 4-wertiger aliphatischer Rest mit 2 bis 24 C-Atomen, ein araliphatischer Rest mit 7 bis 24 C-Atomen, für n größer 0 auch ein aromatischer Rest mit 6 bis 18 C-Atomen, wobei alle Reste durch die o.a. Gruppen substituiert oder gegebenenfalls unterbrochen sein können, ein Melaminrest, ferner ein Rest $R^5(CO)_r$,

$$R^5(SO_2)_r \,,\quad R^5(O-\overset{O}{\overset{\|}{C}})_r \,,\quad R^5(NH-\overset{O}{\overset{\|}{C}})_r \,,$$

wobei n mindestens 1 ist, ferner

$$R^5(SCH_2CH_2CH_2)_r \,,\quad R^5(OCH_2CH_2CH_2)_r \,,$$

$$R^5\left[O-P(OCH_2CH_2)_2\right]_r \,,$$

$$R^5\left[O-B(OCH_2CH_2)_2\right]_r \,,\quad R^5\left[\underset{\overset{\downarrow}{O}}{O-P}(OCH_2CH_2)_2\right]_r \,;$$

in dem

$R^5$ ein gegebenenfalls, wie oben beschrieben, substituierter oder unterbrochener 2- bis 4-wertiger Rest mit 2 bis 24 C-Atomen aliphatischer, araliphatischer oder aromatischer Natur ist, und r eine ganze Zahl von 2 bis 4 und $R^2$ ein aliphatischer, mit 1 bis 18 C-Atomen oder araliphatischer Rest mit 8 bis 24 C-Atomen bedeutet, der entsprechend obiger Beschreibung (zu $R^1$ und $R^3$) mit den dort genannten Gruppen substituiert ist oder durch solche unterbrochene C-Ketten aufweist.

2) Formmassen nach Anspruch 1, dadurch gekennzeichnet, daß sie aliphatische Mono- und Polyamine, die geradkettig oder verzweigt oder alicyclisch mit Aromaten oder weiteren Heteroatomen wie B, O, Si, P, Ti substituiert oder durch solche Heteroatome, olefinische Doppelbindungen oder Aromaten unterbrochen sein können, oder deren Salze mit schwachen Säuren vom pk-Wert $>$ 2 enthalten.

3) Formmassen nach Anspruch 1, dadurch gekennzeichnet, daß sie gegebenenfalls substituierte Polyalkylenpolyamine oder deren Salze enthalten.

4) Formmassen nach Anspruch 1, dadurch gekennzeichnet, daß sie gegebenenfalls substituierte araliphatische Mono- und Polyamine oder deren Salze enthalten.